# EUROPÄISCHE PATENTSCHRIFT

(11) **EP 3 890 995 B1**
(45) Veröffentlichungstag und Bekanntmachung des Hinweises auf die Patenterteilung: **22.03.2023**
(21) Anmeldenummer: 19800937.5
(22) Anmeldetag: 24.10.2019
(51) Int. Cl.: B60C 11/03, B60C 11/12

(54) **FAHRZEUGLUFTREIFEN**
PNEUMATIC VEHICLE TIRE
PNEUMATIQUE DE VÉHICULE

(30) Priorität: 06.12.2018 DE 102018221118
(43) Veröffentlichungstag der Anmeldung: 13.10.2021
(73) Patentinhaber: Continental Reifen Deutschland GmbH, 30165 Hannover (DE)
(72) Erfinder: SCHLITTENHARD, Jan, 30419 Hannover (DE); BOSSE, Stefan, 30419 Hannover (DE); HENZE, Eugen, 30419 Hannover (DE)
(74) Vertreter: Continental Corporation
(86) Internationale Anmeldenummer: PCT/EP2019/078960
(87) Internationale Veröffentlichungsnummer: WO 2020/114673

(56) Entgegenhaltungen:
- EP-A1- 2 465 709
- DE-A1-102010 000 272
- JP-A- 2014 046 743
- US-A1- 2011 277 896
- US-A1- 2011 315 290

## Beschreibung

Die Erfindung betrifft einen Fahrzeugluftreifen mit einem Laufstreifen mit durch Rillen voneinander getrennten Profilelementen, beispielsweise Profilblöcken, welche jeweils mit einer Vielzahl von zur axialen Richtung unter einem Winkel von bis zu 45° sowie sich parallel zueinander erstreckenden Einschnitten mit einer konstanten Einschnittbreite, einer maximalen Einschnitttiefe und zwei Einschnittwänden versehen sind, wobei die Einschnitte aus einem auf die maximale Einschnitttiefe reichenden Hauptabschnitt oder aus einem solchen Hauptabschnitt und zumindest einem seichter ausgeführten Randabschnitt gebildet sind, wobei der Hauptabschnitt in Draufsicht auf den Einschnitt zumindest einen kürzeren Abschnitt und zumindest einen gegenüber diesem längeren Abschnitt aufweist, wobei die Abschnitte miteinander einen Winkel von 90° bis 140° einschließen.

Ein derartiger Fahrzeugluftreifen ist beispielsweise aus der DE 10 2010 000 272 A1 bekannt. Gemäß einer Variante weist der Laufstreifen dieses Fahrzeugluftreifens Profilelemente mit in Draufsicht treppenförmig verlaufenden Einschnitten auf, welche einen auf die Einschnitttiefe ausgeführten Hauptabschnitt und zwei seichter ausgeführte Randabschnitte aufweisen. Der Hauptabschnitt weist kürzere und längere Abschnitte auf, welche abwechselnd aufeinanderfolgen und miteinander einen Winkel von zirka 90° einschließen. Im Hauptanschnitt sind in den längeren Abschnitten im radial äußeren Bereich der einen Einschnittwand erste Vorsprünge ausgebildet, welche eine abgeflachte Seite aufweisen, die eine zur radialen Richtung orientierte Stützfläche bildet, wobei die Länge der Vorsprünge 1,5 mm bis 3,0 mm und die Breite der Vorsprünge 1,0 mm bis 3,0 mm beträgt. Die Stützflächen der ersten Vorsprünge sollen eine abstützende Wirkung bei in Querrichtung wirkenden Kräften zeigen. Im radial inneren Bereich der Einschnittwand sind zweite Vorsprünge ausgebildet, welche eine abgeflachte Seite aufweisen, die parallel zur Laufstreifenperipherie orientiert ist, wobei die Länge der Vorsprünge 3,0 mm bis 7,0 mm und die Breite der Vorsprünge 1,0 mm bis 3,0 mm beträgt. Die zweiten Vorsprünge begrenzen bei fortschreitendem Laufstreifenabrieb die Beweglichkeit der Profilelemente in Umfangsrichtung. Durch solche Vorsprünge und zugehörige korrespondierende Vertiefungen soll der Laufstreifenabrieb vergleichmäßigt werden. Vorsprünge und korrespondiere Vertiefungen sind sowohl im Hauptabschnitt als auch in den eine geringere Tiefe aufweisenden, angehobenen Randabschnitten vorgesehen.

Ein weiterer Fahrzeugluftreifen der eingangs genannten Art ist aus EP 2 465 709 A1 bekannt. Bei einem Ausführungsbeispiel weist der Laufstreifen des Reifens Profilrippen mit durchquerenden Einschnitten auf, wobei die Einschnitte jeweils aus einem auf die maximale Einschnitttiefe reichenden Hauptabschnitt und zwei seichter ausgeführten Randabschnitten gebildet sind, wobei der Hauptabschnitt in Draufsicht auf den Einschnitt einen kürzeren mittleren Abschnitt und zwei gegenüber diesem längere seitliche Abschnitte aufweist. In jedem längeren Abschnitt ist an einer Einschnittwand genau eine Vertiefung ausgebildet ist, welcher auf der anderen Einschnittwand ein mit der Vertiefung korrespondierender Vorsprung gegenüberliegt. Die Vertiefung ist flach kegelstumpfförmig und somit entsprechend spiegelsymmetrisch. Die Randabschnitte des Einschnittes sind frei von Vorsprüngen und Vertiefungen.

Korrespondiere Vorsprünge und Vertiefungen an Einschnittwänden tragen zur Steifigkeit der Profilelemente und dazu bei, bestimmte Fahreigenschaften des Reifens, beispielsweise die Traktionseigenschaften auf schneebedeckter Fahrbahn, zu verbessern. Da die Einschnitte sehr schmal sind (übliche Breite 0,4 mm bis 0, 8mm) ist das Entformungsverhalten, also das Herausziehen der die Einschnitte ausformenden Lamellen aus dem vulkanisierten Laufstreifen, bei den bisher bekannten, mit Vorsprüngen und Vertiefungen versehenen "dreidimensionalen" Einschnitten besonders problematisch, sodass die Möglichkeit besteht, dass die Einschnitte bzw. der Laufstreifen im Bereich der Einschnitte nicht in tadellosem Zustand ausgeformt werden. Insbesondere können im Bereich der Einschnittkanten Einrisse oder Abblätterungen des Laufstreifengummis auftreten. Ferner kann es vorkommen, dass die ausgebildeten Vorsprünge an den korrespondierenden, an der Lamelle befindlichen Einbuchtungen "anhaften" und beim Entfernen der Lamelle von der Einschnittwand abgerissen werden.

Bei einem Fahrzeugluftreifen der eingangs genannten Art, welcher einen Laufstreifen mit Einschnitten, die in Draufsicht unter einem Winkel aneinander anschließende Abschnitte aufweisen und daher zick-zack-förmig verlaufen, verschärft sich die erläuterte Problematik im Hinblick auf das Entformen nach der Vulkanisation des Reifens, da zick-zack-förmige Lamellen - im Vergleich zu geraden Lamellen - aufgrund ihrer Geometrie ohnehin bereits schwerer aus dem gebildeten Einschnitt herausziehbar sind.

Der Erfindung liegt daher die Aufgabe zugrunde, die Einschnitte im Laufstreifen eines Fahrzeugluftreifen der eingangs genannten Art in einer Weise zu gestalten, die das Entstehen von Einrissen und Abblätterungen vermeidet, wobei die vorteilhaften Wirkungen von korrespondierend ausgeführten Vorsprüngen und Vertiefungen an den Einschnittwänden, etwa was die Steifigkeit der Profilelemente und die Fahreigenschaften des Reifens unter winterlichen Fahrbedingungen betrifft, erhalten bleiben bzw. sogar verbessert sein sollen.

Gelöst wird die gestellte Aufgabe durch den Gegenstand des Anspruches 1.

Erfindungsgemäß gestaltete Einschnitte weisen daher ausschließlich in dem auf maximale Einschnitttiefe ausgeführten Hauptabschnitt korrespondierende Vorsprünge und Vertiefungen an den Einschnittwänden auf. Durch ihre doppelt-symmetrische Form sind die Vorsprünge und Vertiefungen besonders stabil. Beim Entformen der diese Einschnitte in der Vulkanisationsform ausbildenden Lamellen treten an den Vorsprüngen und Vertiefungen deutlich geringere Kräfte als bei den bekannten Ausführungen auf, sodass keine Einrisse und Abblätterungen auftreten. In etwaig vorgesehenen im Hinblick auf das Entformungsverhalten besonders kritischen Randabschnitten der Einschnitte sind die Einschnittwände unstrukturiert, also frei von Vorsprüngen und Vertiefungen. Ein Laufstreifen mit Einschnitten mit derart gestalteten Einschnittwänden in seinen Profilelementen weist eine für die Fahreigenschaften unter winterlichen Fahrbedingungen vorteilhafte Steifigkeit auf.

Gemäß einer bevorzugten Ausführungsvariante verläuft die Längsschnitt-Mittelebene der Vertiefung in einer in radialer Richtung gemessenen Tiefe von 30% bis 50%, insbesondere von 35% bis 45%, der maximalen Einschnitttiefe. Durch diese Maßnahme erfolgt eine für die Laufstreifenstabilität besonders vorteilhafte gegenseitige Abstützung der Einschnittwände.

In diesem Zusammenhang ist es ferner bevorzugt, wenn die Vertiefung in der Längsschnitt-Mittelebene eine Länge aufweist, welche 60% bis 85%, insbesondere 75% bis 80%, einer in der Längsschnitt-Mittelebene gemessenen Breite eines Wandabschnittes der Einschnittwand aufweist, welcher über den längeren Abschnitt verläuft. Die Breite des Wandabschnittes sollte dabei 4,0 mm bis 7,0 mm betragen.

Gemäß einer weiteren bevorzugten Ausführungsvariante weist die Vertiefung entlang der Querschnitt-Mittelebene eine Breite von 15% bis 40%, insbesondere von 18% bis 30%, der maximalen Einschnitttiefe auf. Die Breite der Vertiefung ist dadurch besonders vorteilhaft an die Einschnitttiefe abgestimmt.

Eine für die Laufstreifenstabilität besonders vorteilhafte Abstützung der Einschnittwände wird zusätzlich dadurch unterstützt, dass die Vertiefung gegenüber dem Niveau der Einschnittwand eine Tiefe von 50% bis 200%, insbesondere von 100% bis 150%, der Einschnittbreite aufweist.

Gemäß einer weiteren bevorzugten Ausführungsvariante weist die Vertiefung, ermittelt an der Schnittlinie zwischen der Längsschnitt-Mittelebene und der Einschnittwand, zu den Enden des längeren Abschnittes des Einschnittes jeweils einen Abstand von mindestens 0,5 mm auf. Diese Maßnahme ist insbesondere für eine gute Entformbarkeit der Vertiefungen und korrespondieren Vorsprünge vorteilhaft.

Bei einer weiteren, diesbezüglich vorteilhaften Maßnahme ist die Vertiefung durch einen Boden begrenzt, welcher sowohl im Querschnitt als auch im Längsschnitt der Vertiefung U-förmig ist.

In diesem Zusammenhang ist es zusätzlich von Vorteil, wenn sich der Boden der Vertiefung aus einem zentralen, bei Sicht auf die Einschnittwand rechteckigen Bodenabschnitt und zwei an den Längsenden des rechteckigen Bodenabschnittes anschließenden seitlichen, bei Sicht auf die Einschnittwand abgerundeten Bodenabschnitten zusammensetzt. Durch diese Maßnahme sind die mitunter etwas heikler zu entformenden "Randbereiche" der Vertiefungen und damit auch der korrespondierend gestalteten Vorsprünge weitgehend "spannungsfrei" entformbar.

Gemäß einer weiteren bevorzugten Ausführungsvariante verläuft der Hauptabschnitt des Einschnittes in Draufsicht zick-zack-förmig, sodass sich der Hauptabschnitt aus einer Mehrzahl von kürzeren und längeren Abschnitten zusammensetzt, wobei ein längerer Abschnitt abwechselnd auf einen kürzeren Abschnitt folgt. Derart gestaltete Einschnitte sind für die Fahreigenschaften unter winterlichen Fahrbedingungen besonders günstig.

Dabei ist es zusätzlich von Vorteil, wenn der Winkel, welchen der längere Abschnitt bzw. die längeren Abschnitte des Hauptabschnittes mit dem kürzeren Abschnitt bzw. den kürzeren Abschnitten in Draufsicht einschließen, 100° bis 140°, insbesondere 115° bis 125°, beträgt.

Gemäß einer weiteren bevorzugten Ausführungsvariante verläuft der längere Abschnitt bzw. verlaufen die längeren Abschnitte zur axialen Richtung unter einem Winkel von 0° bis 25°.

Eine weitere bevorzugte Ausführungsvariante ist dadurch gekennzeichnet, dass sämtliche kürzeren Abschnitte des Hauptabschnittes parallel zueinander verlaufen und dass sämtliche längeren Abschnitte des Hauptabschnittes parallel zueinander verlaufen.

Insbesondere weist der Hauptabschnitt bis zu vier längere Abschnitte auf.

Weitere Merkmale, Vorteile und Einzelheiten der Erfindung werden nun anhand der Zeichnung, die schematisch ein Ausführungsbeispiel der Erfindung zeigt, näher beschrieben. Dabei zeigen
Fig. 1 eine Ansicht auf Profilblöcke eines Laufstreifens eines Fahrzeugluftreifens,
Fig. 2 eine Draufsicht auf einen Einschnitt mit einer Ausführungsvariante der Erfindung,
Fig. 3 einen Schnitt entlang der Linie III-III der Fig. 2,
Fig. 4 einen entlang eines Einschnittes geöffneten bzw. aufgeschnittenen Profilblock gemäß der in Fig. 2 durch den Pfeil S angedeuteten Sichtrichtung,
Fig. 5 einen Schnitt entlang der Linie V-V der Fig. 4.

Die Erfindung befasst sich mit der Ausgestaltung von Einschnitten in Laufstreifen von Fahrzeugluftreifen in Radialbauart, insbesondere für Personenkraftwagen, Vans oder Light-Trucks, wobei die Fahrzeugluftreifen für ein Fahren unter winterlichen Fahrbedingungen besonders gut geeignet sind.

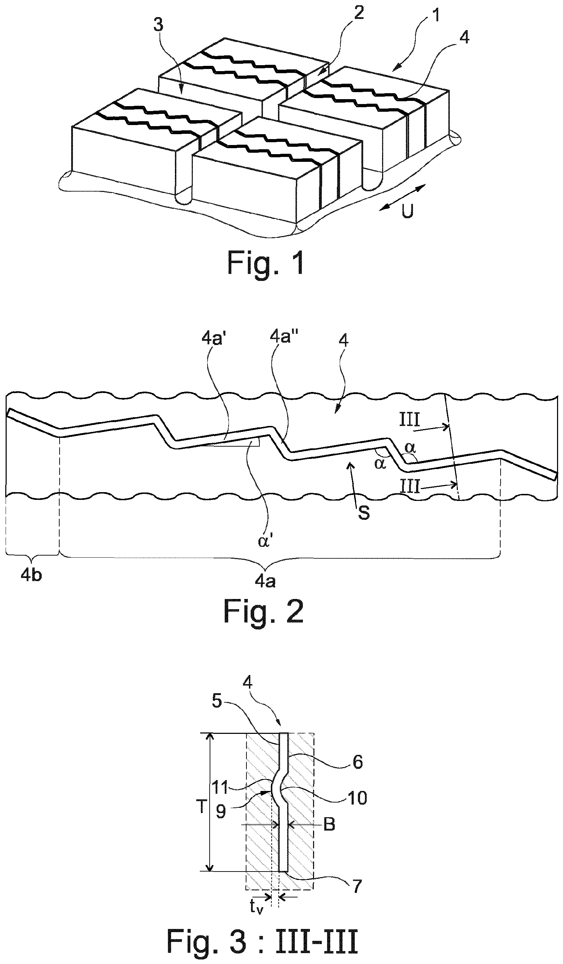

Fig. 1 zeigt vier Profilblöcke 1, welche zu zwei im mittleren Laufstreifenbereich nebeneinander verlaufenden Blockreihen gehören, die durch eine beim gezeigten Ausführungsbeispiel gerade verlaufende Umfangsrille 2 voneinander getrennt sind, wobei weitere nicht bezeichnete Umfangsrillen die Blockreihen außen begrenzen. Der Doppelpfeil U kennzeichnet die Umfangrichtung des Reifens.

Die Umfangsrille 2 weist in radialer Richtung die für den jeweiligen Fahrzeugluftreifen vorgesehene Profiltiefe auf, welche insbesondere 6,5 mm bis 10,0 mm beträgt. Innerhalb der Blockreihen sind in Umfangsrichtung benachbarte Profilblöcke 1 jeweils durch eine Querrille 3 voneinander getrennt, welche beim gezeigten Ausführungsbeispiel eine mit der Umfangsrille 2 übereinstimmende Tiefe aufweist.

Jeder Profilblock 1 ist mit zwei übereinstimmend ausgeführten Einschnitten 4 versehen, welche innerhalb jedes Profilblockes 1 gleichmäßig verteilt angeordnet sind, sich parallel zueinander und in Querrichtung erstrecken und den jeweiligen Profilblock 1 durchqueren. Die weitere Ausgestaltung der Einschnitte 4 wird nachfolgend anhand eines einzelnen Einschnittes 4 erläutert.

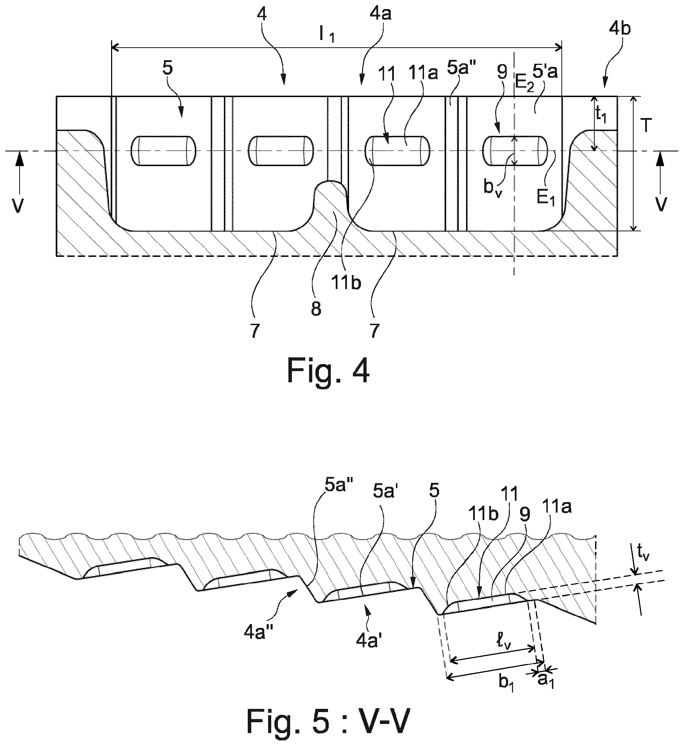

Wie Fig. 3 zeigt, weist der Einschnitt 4 eine konstante Einschnittbreite B von insbesondere 0,4 mm bis 0,8 mm, in radialer Richtung eine maximale Einschnitttiefe T von 80% bis 100% der Profiltiefe, zwei einander gegenüberliegende Einschnittwände 5, 6 und zwei in der Einschnitttiefe T verlaufende Einschnittgrundabschnitte 7 (Fig. 4) auf.

Gemäß Fig. 2 setzt sich der Einschnitt 4 aus einem in Draufsicht zick-zack-förmig, insbesondere sägezahnförmig, verlaufenden Hauptabschnitt 4a, welcher zumindest über den Großteil seiner Erstreckung auf die Einschnitttiefe T ausgeführt, und zwei seitlichen, in bekannter Weise angehobenen Randabschnitten 4b (siehe auch Fig. 4) zusammen. Der Hauptabschnitt 4a ist aus einer Anzahl von in Draufsicht parallel zueinander ausgerichteten, längeren Abschnitten 4a` und einer Anzahl von parallel zueinander ausgerichteten, gegenüber den längeren Abschnitten 4a` kürzeren Abschnitten 4a" gebildet, wobei jeweils ein Abschnitt 4a` abwechselnd auf einen Abschnitt 4a" folgt. Die Abschnitte 4a' und 4a" schließen in Draufsicht miteinander jeweils einen Winkel α von 90° bis 140°, insbesondere von mindestens 100°, und besonders bevorzugter Weise von 115° bis 125°, ein, wobei die längeren Abschnitte 4a` zur axialen Richtung unter einem Winkel α' von vorzugsweise 0° bis 25° verlaufen. Der Hauptabschnitt 4a weist eine Erstreckungslänge l₁ auf (Fig. 4), welche mindestens 80% der Erstreckungslänge des Einschnittes 4 beträgt.

Wie Fig. 4 zeigt, ist beim gezeigte Ausführungsbeispiel mittig im Hauptabschnitt 4a eine die Tiefe des Hauptabschnittes 4a lokal verringernde Grundanhebung 8 ausgebildet, welche die Einschnittwände 5, 6 aneinander anbindet und die bereits erwähnten Einschnittgrundabschnitte 7 voneinander trennt. Im Bereich der Grundanhebung 8 weist der Hauptabschnitt 4a an seiner seichtesten Stelle in radialer Richtung eine Tiefe von beispielsweise 30% bis 75%, insbesondere von 50% bis 65%, der Einschnitttiefe T auf.

Gemäß Fig. 5 weist die Einschnittwand 5 die längeren Abschnitte 4a` des Hauptabschnittes 4a begrenzende ebene Wandabschnitte 5a' und die kürzeren Abschnitte 4a" des Hauptabschnittes 4a begrenzende ebene Wandabschnitte 5a" auf. Die Einschnittwand 6 weist den Wandabschnitten 5a', 5a" gegenüberliegende und zu diesen parallel ausgerichtete Wandabschnitte auf. Die Wandabschnitte 5a', 5a" und die gegenüberliegenden Wandabschnitte der Einschnittwand 6 sind in radialer Richtung langgestreckt, im Wesentlichen rechteckig und reichen bis auf die Einschnitttiefe T (Fig. 4). In jedem Wandabschnitt 5a' ist genau eine Vertiefung 9 (Fig. 3 bis 5) ausgebildet, welcher ein am jeweiligen Wandabschnitt der Einschnittwand 6 ausgebildeter, korrespondierender Vorsprung 10 (Fig. 3) gegenüberliegt. Die Einschnittwand 6 ist daher zumindest im Wesentlichen als Positiv der Einschnittwand 5 ausgeführt (siehe Fig. 3).

Wie Fig. 4 zeigt, ist die Vertiefung 9, bei Sicht auf den Wandabschnitt 5a', in Erstreckungsrichtung des Einschnittes 4 langgestreckt sowie ferner bezüglich einer senkrecht auf den Wandabschnitt 5a' stehenden, in horizontaler Richtung verlaufenden Längsschnitt-Mittelebene Ei (fällt mit der Schnittlinie V-V zusammen) und bezüglich einer senkrecht auf den Wandabschnitt 5a' stehenden, in radialer Richtung verlaufenden Querschnitt-Mittelebene E₂ symmetrisch ausgeführt. Die Längsschnitt-Mittelebene Ei verläuft in einer in radialer Richtung ermittelten Tiefe ti 30% bis 50%, insbesondere von 35% bis 45%, der Einschnitttiefe T. Die Vertiefung 9 weist entlang der Längsschnitt-Mittelebene Ei eine Länge lᵥ (Fig. 5) von 60% bis 85%, insbesondere 75% bis 80%, der in der Längsschnitt-Mittelebene Ei gemessenen Breite bi (Fig. 5) des Wandabschnittes 5a' auf, wobei die Breite bi insbesondere 4,0 mm bis 7,0 mm beträgt. Bevorzugter Weise sind die Länge l_{V} der Vertiefung 9 und die Breite bi des Wandabschnittes 5a' derart aufeinander abgestimmt, dass die Vertiefung 9, ermittelt an der Schnittlinie zwischen der Längsschnitt-Mittelebene Ei und dem Wandabschnitt 5a', zu den Enden des längeren Abschnittes 4a` jeweils einen Abstand ai von mindestens 0,5 mm aufweist (siehe Fig. 4 in Kombination mit Fig. 5). Ferner weist die Vertiefung 9 entlang der Querschnitt-Mittelebene E₂ eine Breite bv (Fig. 5) von 15% bis 40%, insbesondere von 18% bis 30%, der Einschnitttiefe T auf.

Die Vertiefung 9 ist durch einen, im Querschnitt und im Längsschnitt der Vertiefung 9 betrachtet, schwach U-förmigen Boden 11 (Fig. 3, Fig. 5) begrenzt und weist gegenüber dem Niveau des Wandabschnittes 5a' eine Tiefe tv (Fig. 3, Fig. 5) von 50% bis 200%, insbesondere von 100% bis 150%, der Einschnittbreite B (Fig. 3) auf. Wie Fig. 4 zeigt, setzt sich der Boden 11 aus einem zentralen, bei Sicht auf den Wandabschnitt 5a' rechteckigen Bodenabschnitt 11a und zwei seitlichen, bei Sicht auf den Wandabschnitt 5a' außenseitig abgerundeten Bodenabschnitten 11b zusammen, wobei der zentralen Bodenabschnitt 11a über den Großteil, insbesondere über zumindest 65%, der erwähnten Länge l_{V} der Vertiefung 9 verläuft.

Die Erfindung ist auf die beschriebene Ausführungsvariante nicht beschränkt.

Die Randabschnitte der Einschnitte sind optional. Die Einschnitte können daher keinen, einen oder zwei Randabschnitt(e) aufweisen. Bei Einschnitten ohne Randabschnitt ist der Einschnitt vom Hauptabschnitt gebildet. Ferner können sich die Einschnitte zur axialen Richtung unter einem Winkel von 0° bis 45° erstrecken und auch in anderen Profilelementen, wie beispielsweise Profilbändern oder dergleichen, vorgesehen sein. Innerhalb eines Profilelementes verlaufen die Einschnitte in bekannter Weise zumindest in Gruppen parallel zueinander. Die Einschnitte können mit einem oder mit beiden Enden innerhalb des jeweiligen Profilelementes enden. Ferner können die Vertiefungen eine von der beschriebenen Gestalt abweichende Gestalt aufweisen. Die Grundanhebung im Einschnitt ist optional.

### Bezugszeichenliste

- 1: Profilblock
- 2: Umfangsrille
- 3: Querrille
- 4: Einschnitt
- 4a: Hauptabschnitt
- 4a': Abschnitt
- 4a": Abschnitt
- 4b: Randabschnitt
- 5: Einschnittwand
- 5a': Wandabschnitt
- 5a": Wandabschnitt
- 6: Einschnittwand
- 7: Einschnittgrundabschnitt
- 8: Grundanhebung
- 9: Vertiefung
- 10: Vorsprung
- 11: Boden
- 11a: zentraler Bodenabschnitt
- 11b: seitlicher Bodenabschnitt
- a₁: Abstand
- b₁: Breite
- B: Einschnittbreite
- E₁: Längsschnitt-Mittelebene
- E₂: Querschnitt-Mittelebene
- l₁: Erstreckungslänge
- l_{V}: Länge
- t₁: Tiefe
- t_{V}: Tiefe
- T: maximale Einschnitttiefe
- U: Doppelpfeil (Umfangsrichtung)
- α, α': Winkel

## Patentansprüche

1. Fahrzeugluftreifen mit einem Laufstreifen mit durch Rillen (2, 3) voneinander getrennten Profilelementen (1), beispielsweise Profilblöcken (1), welche jeweils mit einer Vielzahl von zur axialen Richtung unter einem Winkel von bis zu 45° sowie sich parallel zueinander erstreckenden Einschnitten (4) mit einer konstanten Einschnittbreite (B), einer maximalen Einschnitttiefe (T) und zwei Einschnittwänden (5, 6) versehen sind,
wobei die Einschnitte (4) aus einem auf die maximale Einschnitttiefe (T) reichenden Hauptabschnitt (4a) oder aus einem solchen Hauptabschnitt (4a) und zumindest einem seichter ausgeführten Randabschnitt (4b) gebildet sind, wobei der Hauptabschnitt (4a) in Draufsicht auf den Einschnitt (4) zumindest einen kürzeren Abschnitt (4"a) und zumindest einen gegenüber diesem längeren Abschnitt (4'a) aufweist,
wobei im längeren Abschnitt (4'a) bzw. in jedem längeren Abschnitt (4'a) an der einen Einschnittwand (5) genau eine Vertiefung (9) ausgebildet ist, welche bezüglich einer senkrecht auf die Einschnittwand (5) stehenden, in radialer Richtung verlaufenden Querschnitt-Mittelebene (E₂) sowie bezüglicher einer orthogonal zu dieser verlaufenden Längsschnitt-Mittelebene (E₁) spiegelsymmetrisch ausgeführt ist,
wobei der Vertiefung (9) auf der anderen Einschnittwand (6) ein mit der Vertiefung (9) korrespondierender Vorsprung (10) gegenüberliegt, und
wobei etwaige Randabschnitte (4b) des Einschnittes (4) frei von Vorsprüngen (10) und Vertiefungen (9) sind,
**dadurch gekennzeichnet, dass**
die Abschnitte (4'a, 4‴a) miteinander einen Winkel (α) von 90° bis 140° einschließen und dass der Vorsprung (10) und die Vertiefung (9) in Erstreckungsrichtung des Einschnitts (4) langgestreckt sind.

2. Fahrzeugluftreifen nach Anspruch 1, **dadurch gekennzeichnet, dass** die Längsschnitt-Mittelebene (E₁) der Vertiefung (9) in einer in radialer Richtung gemessenen Tiefe (t₁) von 30% bis 50%, insbesondere von 35% bis 45%, der maximalen Einschnitttiefe (T) verläuft.

3. Fahrzeugluftreifen nach Anspruch 1 oder 2, **dadurch gekennzeichnet, dass** die Vertiefung (9) in der Längsschnitt-Mittelebene (E₁) eine Länge (lv) aufweist, welche 60% bis 85%, insbesondere 75% bis 80%, einer in der Längsschnitt-Mittelebene (E₁) gemessenen Breite (bi) eines Wandabschnittes (5a') der Einschnittwand (5) aufweist, welcher über den längeren Abschnitt (4a') verläuft.

4. Fahrzeugluftreifen nach Anspruch 3, **dadurch gekennzeichnet, dass** die Breite (bi) des Wandabschnittes (5a') 4,0 mm bis 7,0 mm beträgt.

5. Fahrzeugluftreifen nach einem der Ansprüche 1 bis 4, **dadurch gekennzeichnet, dass** die Vertiefung (9) entlang der Querschnitt-Mittelebene (E₂) eine Breite (bv) von 15% bis 40%, insbesondere von 18% bis 30%, der maximalen Einschnitttiefe (T) aufweist.

6. Fahrzeugluftreifennach einem der Ansprüche 1 bis 5, **dadurch gekennzeichnet, dass** die Vertiefung (9) gegenüber dem Niveau der Einschnittwand (5) eine Tiefe (tv) von 50% bis 200%, insbesondere von 100% bis 150%, der Einschnittbreite (B) aufweist.

7. Fahrzeugluftreifen nach einem der Ansprüche 1 bis 6, **dadurch gekennzeichnet, dass** die Vertiefung (9), ermittelt an der Schnittlinie zwischen der Längsschnitt-Mittelebene (E₁) und der Einschnittwand (5) zu den Enden des längeren Abschnittes (4a') des Einschnittes (4),jeweils einen Abstand (a₁) von mindestens 0,5 mm aufweist.

8. Fahrzeugluftreifen nach einem der Ansprüche 1 bis 7, **dadurch gekennzeichnet, dass** die Vertiefung (9) durch einen Boden (11) begrenzt ist, welcher sowohl im Querschnitt als auch im Längsschnitt der Vertiefung (9) U-förmig ist.

9. Fahrzeugluftreifen nach Anspruch 8, **dadurch gekennzeichnet, dass** sich der Boden (11) der Vertiefung (9) aus einem zentralen, bei Sicht auf die Einschnittwand (5) rechteckigen Bodenabschnitt (11a) und zwei an den Längsenden des rechteckigen Bodenabschnittes (11a) anschließenden seitlichen, bei Sicht auf die Einschnittwand (5) abgerundeten Bodenabschnitten (11b) zusammensetzt.

10. Fahrzeugluftreifen nach einem der Ansprüche 1 bis 9, **dadurch gekennzeichnet, dass** der Hauptabschnitt (4a) des Einschnittes (4) in Draufsicht zick-zack-förmig verläuft, sodass sich der Hauptabschnitt (4a) aus einer Mehrzahl von kürzeren und längeren Abschnitten (4"a, 4'a) zusammensetzt, wobei ein längerer Abschnitt (4'a) abwechselnd auf einen kürzeren Abschnitt (4"a) folgt.

11. Fahrzeugluftreifen nach einem der Ansprüche 1 bis 10, **dadurch gekennzeichnet, dass** der Winkel (α), welchen der längere Abschnitt (4a') bzw. die längeren Abschnitte (4a') des Hauptabschnittes (4a) mit dem kürzeren Abschnitt (4a") bzw. den kürzeren Abschnitten (4a") in Draufsicht einschließen, 100° bis 140°, insbesondere 115° bis 125°, beträgt.

12. Fahrzeugluftreifen nach einem der Ansprüche 1 bis 11, **dadurch gekennzeichnet, dass** der längere Abschnitt (4a') bzw. die längeren Abschnitte (4a') zur axialen Richtung unter einem Winkel (α') von 0° bis 25° verläuft bzw. verlaufen.

13. Fahrzeugluftreifen nach einem der Ansprüche 1 bis 12, **dadurch gekennzeichnet, dass** sämtliche kürzeren Abschnitt (4a") des Hauptabschnittes (4a) parallel zueinander verlaufen und dass sämtliche längeren Abschnitte (4a') des Hauptabschnittes (4a) parallel zueinander verlaufen.

14. Fahrzeugluftreifen nach einem der Ansprüche 1 bis 13, **dadurch gekennzeichnet, dass** der Hauptabschnitt (4a) bis zu vier längere Abschnitt (4a') aufweist.

## Claims

1. Pneumatic vehicle tyre having a tread having profile elements (1), for example profile blocks (1), which are mutually separated by grooves (2, 3) and which are in each case provided with a multiplicity of incisions (4) that extend at an angle of up to 45° in relation to the axial direction and so as to be mutually parallel and have a constant incision width (B), a maximum incision depth (T) and two incision walls (5, 6);
wherein the incisions (4) are formed from a main portion (4a) which reaches the maximum incision depth (T), or from one such main portion (4a) and at least one peripheral portion (4b) embodied to a lesser depth;
wherein the main portion (4a) in a plan view onto the incision (4) has at least one shorter portion (4"a) and at least one portion (4'a) which is longer in comparison;
wherein configured in the longer portion (4'a), or in each longer portion (4'a), on the one incision wall (5) is exactly one depression (9) embodied so as to be mirror-symmetrical in relation to a cross-sectional central plane (E₂) which is perpendicular to the incision wall (5) and runs in the radial direction, and in relation to a longitudinal sectional central plane (E₁) which runs so as to be orthogonal to said cross-sectional central plane (E₂);
wherein a protrusion (10) corresponding to the depression (9) lies on the other incision wall (6) so as to be opposite the depression (9); and wherein any potential peripheral portions (4b) of the incision (4) are free of protrusions (10) and depressions (9), **characterized in that** the portions (4'a, 4‴a) conjointly enclose an angle (α) of 90° to 140°, and **in that** the protrusion (10) and the depression (9) are elongate in the direction of extent of the incision (4).

2. Pneumatic vehicle tyre according to Claim 1, **characterized in that** the longitudinal sectional central plane (E₁) of the depression (9) runs at a depth (t₁), measured in the radial direction, of 30% to 50%, in particular of 35% to 45%, of the maximum incision depth (T).

3. Pneumatic vehicle tyre according to Claim 1 or 2, **characterized in that** the depression (9) in the longitudinal sectional central plane (E₁) has a length (lv) which has 60% to 85%, in particular 75% to 80%, of a width (b₁), measured in the longitudinal sectional central plane (E₁), of a wall portion (5a') of the incision wall (5) that runs across the longer portion (4a').

4. Pneumatic vehicle tyre according to Claim 3, **characterized in that** the width (b₁) of the wall portion (5a') is 4.0 mm to 7.0 mm.

5. Pneumatic vehicle tyre according to one of Claims 1 to 4, **characterized in that** the depression (9) along the cross-sectional central plane (E₂) has a width (bv) of 15% to 40%, in particular of 18% to 30%, of the maximum incision depth (T).

6. Pneumatic vehicle tyre according to one of Claims 1 to 5, **characterized in that** the depression (9) in relation to the level of the incision wall (5) has a depth (tv) of 50% to 200%, in particular of 100% to 150%, of the incision width (B).

7. Pneumatic vehicle tyre according to one of Claims 1 to 6, **characterized in that** the depression (9), determined at the section line between the longitudinal sectional central plane (E₁) and the incision wall (5) have in each case a spacing (a₁) of at least 0.5 mm from the ends of the longer portion (4a') of the incision (4).

8. Pneumatic vehicle tyre according to one of Claims 1 to 7, **characterized in that** the depression (9) is delimited by a base (11) which in the cross section as well as in the longitudinal section of the depression (9) is U-shaped.

9. Pneumatic vehicle tyre according to Claim 8, **characterized in that** the base (11) of the depression (9) is composed of a central base portion (11a), which when viewed onto the incision wall (5) is rectangular, and two lateral base portions (11b) which adjoin the longitudinal ends of the rectangular base portion (11a) and, when viewed onto the incision wall (5), are radiused.

10. Pneumatic vehicle tyre according to one of Claims 1 to 9, **characterized in that** the main portion (4a) of the incision (4), in the plan view from above, runs in a zig-zag pattern such that the main portion (4a) is composed of a plurality of shorter and longer portions (4"a, 4'a), wherein a longer portion (4'a) alternates with a shorter portion (4"a).

11. Pneumatic vehicle tyre according to one of Claims 1 to 10, **characterized in that** the angle (α), which in the plan view from above is enclosed conjointly by the longer portion (4a'), or the longer portions (4a'), of the main portion (4a) and the shorter portion (4a"), or the shorter portions (4a"), is 100° to 140°, in particular 115° to 125°.

12. Pneumatic vehicle tyre according to one of Claims 1 to 11, **characterized in that** the longer portion (4a'), or the longer portions (4a'), runs/run at an angle (α') of 0° to 25° in relation to the axial direction.

13. Pneumatic vehicle tyre according to one of Claims 1 to 12, **characterized in that** all of the shorter portions (4a") of the main portion (4a) run so as to be mutually parallel, and **in that** all of the longer portions (4a') of the main portion (4a) run so as to be mutually parallel.

14. Pneumatic vehicle tyre according to one of Claims 1 to 13, **characterized in that** the main portion (4a) has up to four longer portions (4a').

## Revendications

1. Pneumatique de véhicule, comprenant une bande de roulement pourvue d'éléments profilés (1), par exemple de blocs profilés (1), séparés les uns des autres par des rainures (2, 3) et qui sont munis respectivement d'une pluralité d'incisions (4) s'étendant selon un angle allant jusqu'à 45° par rapport à la direction axiale et en parallèle les unes aux autres, ayant une largeur d'incision constante (B), une profondeur d'incision maximale (T) et deux parois d'incision (5, 6),
dans lequel les incisions (4) sont formées par une partie principale (4a) allant jusqu'à la profondeur d'incision maximale (T) ou par une telle partie principale (4a) et au moins une partie de bord (4b) réalisée de manière moins profonde,
dans lequel la partie principale (4a), en vue de dessus sur l'incision (4), présente au moins une partie plus courte (4"a) et au moins une partie plus longue (4'a) par rapport à celle-ci,
dans lequel, dans la partie plus longue (4'a), ou dans chaque partie plus longue (4'a), exactement un creux (9) est réalisé sur ladite une paroi d'incision (5) et qui est réalisé en miroir par rapport à un plan médian de section transversale (E₂), perpendiculaire à la paroi d'incision (5) et s'étendant dans la direction radiale, ainsi que par rapport à un plan médian de section longitudinale (E₁) s'étendant orthogonalement à celui-ci,
dans lequel une saillie (10) correspondant au creux (9) est opposée au creux (9) sur l'autre paroi d'incision (6) à, et
dans lequel des parties de bord éventuelles (4b) de l'incision (4) sont exemptes de saillies (10) et de creux (9),
**caractérisé en ce que** les parties (4'a, 4"'a) forment ensemble un angle (α) de 90° à 140°, et **en ce que** la saillie (10) et le creux (9) sont allongés dans la direction d'extension de l'incision (4).

2. Pneumatique de véhicule selon la revendication 1, **caractérisé en ce que** le plan médian de section longitudinale (E₁) du creux (9) s'étend à une profondeur (t₁), mesurée dans la direction radiale, de 30 % à 50 %, en particulier de 35 % à 45 %, de la profondeur d'incision maximale (T).

3. Pneumatique de véhicule selon la revendication 1 ou 2, **caractérisé en ce que** le creux (9), dans le plan médian de section longitudinale (E₁), présente une longueur (l_{V}) qui présente de 60 % à 85 %, en particulier de 75 % à 80 %, d'une largeur (b₁), mesurée dans le plan médian de section longitudinale (E₁), d'une partie de paroi (5a') de la paroi d'incision (5) qui s'étend sur la partie plus longue (4a').

4. Pneumatique de véhicule selon la revendication 3, **caractérisé en ce que** la largeur (b₁) de la partie de paroi (5a') mesure de 4,0 mm à 7,0 mm.

5. Pneumatique de véhicule selon l'une quelconque des revendications 1 à 4, **caractérisé en ce que** le creux (9) présente le long du plan médian de section transversale (E₂) une largeur (bv) de 15 % à 40 %, en particulier de 18 % à 30 %, de la profondeur d'incision maximale (T).

6. Pneumatique de véhicule selon l'une quelconque des revendications 1 à 5, **caractérisé en ce que** le creux (9) présente par rapport au niveau de la paroi d'incision (5) une profondeur (tv) de 50 % à 200 %, en particulier de 100 % à 150 %, de la largeur d'incision (B).

7. Pneumatique de véhicule selon l'une quelconque des revendications 1 à 6, **caractérisé en ce que** le creux (9), déterminé au niveau de la ligne de coupe entre le plan médian de section longitudinale (E₁) et la paroi d'incision (5), présente respectivement une distance (a₁) d'au moins 0,5 mm par rapport aux extrémités de la partie plus longue (4a') de l'incision (4).

8. Pneumatique de véhicule selon l'une quelconque des revendications 1 à 7, **caractérisé en ce que** le creux (9) est limité par un fond (11) qui est en forme de U à la fois en section transversale et en section longitudinale du creux (9).

9. Pneumatique de véhicule selon la revendication 8, **caractérisé en ce que** le fond (11) du creux (9) est composé d'une partie de fond centrale (11a), rectangulaire en vue sur la paroi d'incision (5), et de deux parties de fond latérales (11b), arrondies en vue sur la paroi d'incision (5), adjacentes aux extrémités longitudinales de la partie de fond rectangulaire (11a).

10. Pneumatique de véhicule selon l'une quelconque des revendications 1 à 9, **caractérisé en ce que** la partie principale (4a) de l'incision (4) s'étend en zigzag en vue de dessus de sorte que la partie principale (4a) est composée d'une pluralité de parties plus courtes et plus longues (4"a, 4'a), dans lequel une partie plus longue (4'a) est consécutive en alternance à une partie plus courte (4"a).

11. Pneumatique de véhicule selon l'une quelconque des revendications 1 à 10, **caractérisé en ce que** l'angle (α), formé par la partie plus longue (4a') ou les parties plus longues (4a') de la partie principale (4a) avec la partie plus courte (4a") ou les parties plus courtes (4a") en vue de dessus, mesure de 100° à 140°, en particulier de 115° à 125°.

12. Pneumatique de véhicule selon l'une quelconque des revendications 1 à 11, **caractérisé en ce que** la partie plus longue (4a') ou les parties plus longues (4a') s'étend(ent) par rapport à la direction axiale selon un angle (α') de 0° à 25°.

13. Pneumatique de véhicule selon l'une quelconque des revendications 1 à 12, **caractérisé en ce que** toutes les parties plus courtes (4a") de la partie principale (4a) s'étendent en parallèle les unes aux autres, et **en ce que** toutes les parties plus longues (4a') de la partie principale (4a) s'étendent en parallèle les unes aux autres.

14. Pneumatique de véhicule selon l'une quelconque des revendications 1 à 13, **caractérisé en ce que** la partie principale (4a) présente jusqu'à quatre parties plus longues (4a').
